# EUROPEAN PATENT APPLICATION

(11) **EP 3 941 070 A1**
(43) Date of publication of application: **19.01.2022**
(21) Application number: 20913803.1
(22) Date of filing: 25.11.2020
(51) Int. Cl.: H04N 21/238, H04N 21/2387, H04N 21/2343

(54) **RESOURCE TRANSMISSION METHOD AND COMPUTER DEVICE**

(30) Priority: 17.01.2020 CN 202010054760
(71) Applicant: Beijing Dajia Internet Information Technology Co., Ltd., Beijing 100085 (CN)
(72) Inventor: ZHOU, Chao, Haidian District Beijing 100085 (CN)
(74) Representative: Yang, Shu
(86) International application number: PCT/CN2020/131552
(87) International publication number: WO 2021/143360

(57) **Abstract**

The present disclosure relates to the technical field of communications, and relates to a resource transmission method and a computer device. In the present disclosure, in response to a frame obtaining request of a multimedia resource, a pulling position parameter of the multimedia resource is obtained; an initial frame of the multimedia resource is determined on the basis of the pulling position parameter; and a media frame of the multimedia resource is sent starting from the initial frame.

## Description

### CROSS-REFERENCE TO RELATED APPLICATION

The present disclosure claims priority to Chinese Patent Application No. 202010054760.6, filed on January 17, 2020 and titled "METHOD AND DEVICE FOR TRANSMITTING RESOURCES, COMPUTER APPARATUS AND STORAGE MEDIUM", the disclosure of which is herein incorporated by reference in its entirety.

### TECHNICAL FIELD

The present disclosure relates to the field of communication technologies, and in particular to a method for transmitting resources and a computer apparatus.

### BACKGROUND

With a development of communication technologies, a user may browse audio and video resources on a terminal anytime and anywhere. At present, when a server transmits audio and video resources to a terminal (commonly known as a "stream pulling stage"), a media transmission mode based on segments may be adopted.

The media transmission mode based on segments include the common Dynamic Adaptive Streaming over HTTP (DASH for short, which is a standard developed by MPEG for HTTP-based adaptive streaming media transmission, where MPEG is short for Moving Picture Experts Group), HTTP Live Streaming (HLS for short, which is a standard developed by Apple Inc. for HTTP-based adaptive streaming media transmission), etc. The server divides an audio and video resource into audio and video segments, and each of which may be transcoded to have different code rates. When playing the audio and video resource, a terminal respectively accesses URLs of each audio and video segment divided from the audio and video resource. Different audio and video segments may correspond to the same or different code rates, so that the terminal may conveniently switch between audio and video resources of different code rates, and such a process is also referred to as an adaptive adjustment of code rates based on the terminal's bandwidth.

### SUMMARY

The present disclosure provides a method for transmitting resources and a computer apparatus. Technical solutions of the present disclosure are as follows:

According to one aspect of embodiments of the present disclosure, a method for transmitting resources is provided. The method includes: acquiring a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource; determining an initial frame of the multimedia resource based on the pull position parameter of the multimedia resource; and transmitting the media frames of the multimedia resource from the initial frame, where a timestamp of the media frames is greater than or equal to a timestamp of the initial frame.

According to another aspect of embodiments of the present disclosure, a device for transmitting resources is provided. The device includes: an acquiring unit configured to acquire a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource; a first determining unit configured to determine an initial frame of the multimedia resource based on the pull position parameter of the multimedia resource; and a transmitting unit configured to transmit the media frames of the multimedia resource from the initial frame, where a timestamp of the media frames is greater than or equal to a timestamp of the initial frame.

According to still another aspect of embodiments of the present disclosure, a computer apparatus is provided. The computer apparatus includes: one or more processors; and one or more memories for storing an instruction executable by the one or more processors, wherein the one or more processors are configured to execute the instruction to implement the following operations: acquiring a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource; determining an initial frame of the multimedia resource based on the pull position parameter of the multimedia resource; and transmitting the media frames of the multimedia resource from the initial frame, where a timestamp of the media frames is greater than or equal to a timestamp of the initial frame.

According to yet another aspect of embodiments of the present disclosure, a storage medium is provided. At least one instruction in the storage medium, when executed by one or more processors of a computer apparatus, causes the computer apparatus to implement the following operations: acquiring a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource; determining an initial frame of the multimedia resource based on the pull position parameter of the multimedia resource; and transmitting the media frames of the multimedia resource from the initial frame, where a timestamp of the media frames is greater than or equal to a timestamp of the initial frame.

According to still another aspect of embodiments of the present disclosure, a computer program product is provided. The computer program product includes one or more instructions, wherein the one or more instructions, when executed by one or more processors of a computer apparatus, cause the computer apparatus to implement the method for transmitting resources of the said one aspect.

### BRIEF DESCRIPTION OF THE DRAWINGS

FIG. 1 is a schematic diagram of an implementation environment of a method for transmitting resources according to an embodiment;
FIG. 2 is a schematic principal diagram of a FAS framework according to an embodiment of the present disclosure;
FIG. 3 is a flowchart of a method for transmitting resources according to an embodiment;
FIG. 4 is an interaction flowchart of a method for transmitting resources according to an embodiment;
FIG. 5 is a schematic principal diagram of determining a target timestamp according to an embodiment of the present disclosure;
FIG. 6 is a block diagram of a logical structure of a device for transmitting resources according to an embodiment; and
FIG. 7 is a schematic structural diagram of a computer apparatus according to an embodiment of the present disclosure.

### DETAILED DESCRIPTION

The terms "first", "second", etc. in the specification and claims of the present disclosure and the above-mentioned drawings are used to distinguish similar objects, and are not necessarily used to describe a specific sequence or order. It should be understood that data used in this way may be interchanged in appropriate circumstances so that embodiments of the present disclosure described herein may be implemented in an order other than those illustrated or described herein.

User information involved in the present disclosure may be information authorized by a user or fully authorized by all parties.

Hereinafter, terms involved in the present disclosure are explained.

### I. Flash Vedio (FLV)

The FLV is a streaming media format, which is a video format developed with the introduction of Flash MX (an animation software). The FLV has a very small file, a very fast loading speed, so that it is possible to watch video files on a network (i.e., browsing videos on-line), and the FLV effectively addresses a problem that an SWF (a dedicated file format for Flash) file exported after importing a video file into Flash may not be applied well on the network due to a large size.

### II. Streaming Media

The streaming media are transmitted in a streaming transmission mode, which refers to a technology and process of compressing a sequence of multimedia resources and sending resource packets over the Internet, so as to transmit the multimedia resources in real time on the Internet for viewing. The technology makes the resource packages to be transmitted like running water. Without this technology, an entire media file must be downloaded before using, and media resources may only be viewed off-line. By the streaming transmission, on-site multimedia resources or multimedia resources pre-stored on a server may be transmitted. When an audience user watches these multimedia resources, the multimedia resources may be played by a specific play software after reaching an audience terminal of the audience user.

### III. FLV Adaptive Streaming (FAS for short, which is a FLV-based adaptive streaming media transmission standard)

The FAS is a streaming resource transmission standard (or referred to as a resource transmission protocol) provided in the present disclosure. Unlike the traditional segment-based media transmission mode, The FAS standard may achieve frame-level multimedia resource transmission. Instead of waiting for a complete video segment to arrive before sending a resource package to a terminal, the server determines a pull position parameter after parsing a frame acquisition request of the terminal, then determines an initial frame of a multimedia resource based on the pull position parameter and transmits media frames of the multimedia resource to the terminal frame by frame from the initial frame. It should be noted that each frame acquisition request may correspond to a certain code rate. When the terminal's own network bandwidth changes, the terminal may adjust corresponding code rate adaptively and retransmits a frame acquisition request corresponding to the adjusted code rate, so as to achieve the effect of adaptively adjusting code rates for multimedia resources. The FAS standard may achieve frame-level transmission and reduce end-to-end delays. Only when a code rate is switched, a new frame acquisition request needs to be transmitted, which greatly reduces the number of requests and reduces a communication overhead of a resource transmission process.

### IV. Live broadcast and on-demand broadcast

In the live broadcast, a multimedia resource is recorded in real-time, and an anchor user "pushes" a media stream (refers to pushing a multimedia resource in a streaming transmission mode) to a server by an anchor terminal, an audience user triggers an audience terminal to enter a live broadcast interface of the anchor user, and then "pulls" the media stream (refers to pulling the multimedia resource in the streaming transmission mode) from the server to the audience terminal. The audience terminal decodes and plays multimedia resources, thereby achieving video play in real-time.

The on-demand broadcast is also known as Video On-Demand (VOD). Multimedia resources are pre-stored on the server, and the server may provide multimedia resources specified by the audience user according to requirements of the audience user. In some embodiments, the audience terminal transmits a VOD request to the server, and the server transmits a multimedia resource to the audience terminal after querying the multimedia resource specified in the VOD request, that is, the audience user may selectively play a specific multimedia resource.

It is possible to control play progress of content of VOD arbitrarily, but not content of live streaming. A play speed of live broadcast contents depends on real-time live broadcast progress of the anchor user.

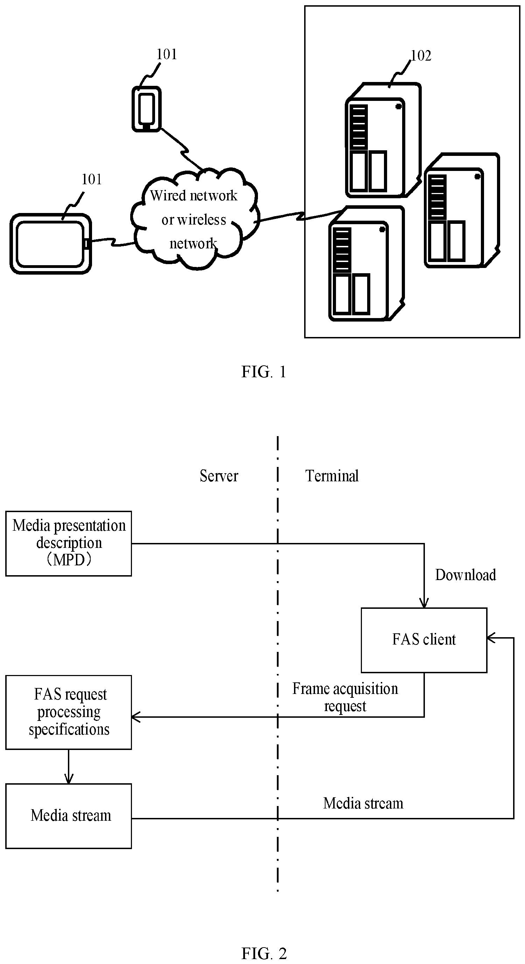

FIG. 1 is a schematic diagram of an implementation environment of a method for transmitting resources according to an embodiment. Referring to FIG. 1, the implementation environment may include at least one terminal 101 and a server 102, where the server 102 is also a kind of computer apparatus, which are described in detail below.

In some embodiments, the terminal 101 is configured for multimedia resource transmission, and each terminal may be installed with a media codec component and a media play component. The media codec component is configured to decode multimedia resources after the multimedia resources (such as resource packages transmitted in segments, media frames transmitted in frame-level) are received, and the media play component is configured to play the multimedia resources after the multimedia resources are decoded.

According to different user identities, the terminals 101 may be divided into an anchor terminal and an audience terminal. The anchor terminal corresponds to the anchor user, and the audience terminal corresponds to the audience user. It should be noted that for the same terminal, the terminal may be either an anchor terminal or an audience terminal. For example, the terminal is the anchor terminal when the user is recording a live broadcast, and the terminal is the audience terminal when the user is viewing a live broadcast.

The terminal 101 and the server 102 may be connected via a wired network or a wireless network.

In some embodiments, the server 102 is configured to provide multimedia resources to be transmitted, and the server 102 may include at least one of: a server, multiple servers, a cloud computing platform, or a virtualization center. In some embodiments, the server 102 may undertake primary calculation operations, and the terminal 101 may undertake secondary calculation operations; or the server 102 may undertake secondary calculation operations, and the terminal 101 may undertake primary calculation operations; or the terminal 101 and the server 102 may perform collaborative calculations by being configured as a distributed computing architecture.

In some embodiments, the server 102 may be a clustered Content Delivery Network (CDN) server which includes a central platform and edge servers deployed in various places. Through a load balancing module, a content distribution module, a dispatching module and other functional modules of the central platform, the user's terminal may acquire needed contents (i.e., multimedia resources) nearby from a local edge server.

The CDN server adds a caching mechanism between the terminal and the central platform. The caching mechanism refers to edge servers (such as WEB servers) deployed at different geographical locations. In optimizing performances, the central platform may dispatch an edge server closest to the terminal to serve the terminal according to distances between the terminal and edge servers, thereby more effectively issuing contents to the terminal.

Multimedia resources involved in embodiments of the present disclosure include, but are not limited to at least one of: video resources, audio resources, image resources, or text resources, and the embodiments of the present disclosure do not specifically limit the types of multimedia resources. For example, the multimedia resource is a live video stream of a network anchor, or a historical on-demand video pre-stored on the server, or a live audio stream of a radio anchor, or a historical on-demand audio pre-stored on the server.

In some embodiments, the device types of the terminal 101 include, but are not limited to: televisions, smart phones, smart speakers, in-vehicle terminals, tablet computers, e-book readers, Moving Picture Experts Group Audio Layer III (MP3) players, Moving Picture Experts Group Audio Layer IV (MP4) players, laptop or desktop computers. In the following embodiment, the terminal 101 includes a smart phone as an example.

Those skilled in the art may know that the number of the terminal 101 may be only one, or the number of the terminal 101 may be tens or hundreds, or more. The embodiments of the present disclosure do not limit the number and device type of the terminal 101.

FIG. 2 is a schematic principal diagram of a FAS framework according to an embodiment of the present disclosure. Referring to FIG. 2, the embodiment of the present disclosure provides a kind of FAS (FLV Adaptive Streaming) frame, in which multimedia resources are transmitted between the terminal 101 and the server 102 based on a FAS protocol.

Any one of the terminals is used as an example for description. An application (also known as a FAS client) may be installed on the terminal. The application is configured for browsing multimedia resources. For example, the application may be a short video application, a live broadcast application, a video-on-demand application, a social application or a shopping application, etc., and the embodiments of the present disclosure do not specifically limit the type of the application.

The user may launch the application on the terminal so that the terminal displays a resource push interface (for example, a homepage or a function interface of the application). The resource push interface includes thumbnail information of at least one multimedia resource, and the thumbnail information includes at least one of: a title, an introduction text, an issuer, a poster, a trailer, or a highlight segment. In response to the user's touch operation on the thumbnail information of any multimedia resource, the terminal may redirect from the resource push interface to a resource play interface which includes a play option of the multimedia resource. In response to the user's touch operation on the play option, the terminal downloads a Media Presentation Description (MPD) file of the multimedia resource from the server, determines address information of the multimedia resource based on the MPD file, and transmits a frame acquisition request (or an FAS request) carrying the address information to the server, so that the server parses and responds to the frame acquisition request based on the FAS request processing specifications provided by the embodiments of the present disclosure and the server returns media frames of the multimedia resource to the terminal (that is, returns the media stream to the terminal) after the server finds the media frames of the multimedia resource (continuous media frames may constitute a media stream). After receiving the media stream, the terminal calls the media codec component to decode the media stream to acquire the decoded media stream, and calls the media play component to play the decoded media stream.

It should be noted that, after the server transcodes the multimedia resources, multimedia resources with multiple code rates may be formed. At this time, the server may allocate different address information for the multimedia resources with different code rates, and record the address information of the multimedia resources with respective code rates in the MPD. After downloading the MPD, the terminal may transmit a frame acquisition request carrying different address information to the server at different times, and the server may return media frames of a corresponding multimedia resource at different code rates.

In the above process, different address information is used to specify different code rates, and different pull position parameters may specify different initial pull positions of multimedia resources. Consequently, after specifying an initial pull position and a code rate (if default, the server may configure a default value therefor) in a frame acquisition request, if the code rate needs to be switched during play, the terminal only needs to transmit a new frame acquisition request again, and the server may transmit a media stream to the terminal at another code rate from the initial frame at any time. That is, the terminal may dynamically pull a media stream at another code rate from any initial frame.

In some embodiments, when starting a broadcast (start playing), the terminal determines a target code rate of a multimedia resource to be requested for this time, looks up target address information of the multimedia resource with the target code rate in the MPD, and transmits a frame acquisition request carrying the target address information to the server. In this way, the target code rate of the multimedia resource to be requested by the terminal for this time may be specified in the frame acquisition request, and the server returns media frames of the multimedia resource at the target code rate.

In the above case, when the current network bandwidth of the terminal fluctuates, the terminal may adaptively adjust a code rate to be switched that matches the current network bandwidth according to an adaptive strategy, and looks up to-be-switched address information of the multimedia resource in the code rate to be switched from the MPD. The terminal may disconnect a media stream transmission link of a current code rate and transmit a frame acquisition request carrying the to-be-switched address information to the server, and the server returns media frames of the multimedia resource in the to-be-switched code rate and establishes a media stream transmission link of the code rate to be switched.

In some embodiments, the tenninal may not disconnect the media stream transmission link of a current code rate, but directly initiates a frame acquisition request carrying the to-be-switched address information and establishes a media stream transmission link of the code rate to be switched (for transmission of a new media stream). The original media stream serves as a backup stream and may be resumed once a new media stream has a transmission abnormality.

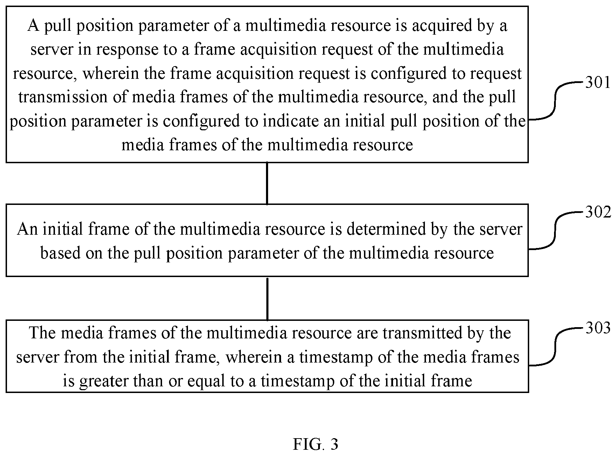

FIG. 3 is a flowchart of a method for transmitting resources according to an embodiment. The method for transmitting resources is applied to a computer apparatus, and the computer apparatus being a server in the FAS framework involved in the above-mentioned implementation environment is taken as example for illustration.

In 301, a pull position parameter of a multimedia resource is acquired by a server in response to a frame acquisition request of the multimedia resource, where the frame acquisition request is configured to request transmission of media frames of the multimedia resource and the pull position parameter is configured to indicate an initial pull position of the media frames of the multimedia resource.

In 302, an initial frame of the multimedia resource is determined by the server based on the pull position parameter of the multimedia resource.

In 303, the media frames of the multimedia resource are transmitted by the server from the initial frame, where a timestamp of the media frames is greater than or equal to a timestamp of the initial frame.

In some embodiments, determining an initial frame of the multimedia resource based on the pull position parameter of the multimedia resource includes:
acquiring an audio parameter of the multimedia resource, where the audio parameter is configured to indicate whether the media frames are audio frames;
determining a target timestamp based on the audio parameter and the pull position parameter; and
determining the initial frame of the multimedia resource based on the target timestamp.

In some embodiments, determining a target timestamp based on the audio parameter and the pull position parameter includes:
determining that the target timestamp is a value acquired by subtracting an absolute value of a default value of the pull position parameter from a maximum timestamp, if the pull position parameter is the default value and the audio parameter is a default value or the audio parameter is false;
determining that the target timestamp is a value acquired by subtracting the absolute value of the default value of the pull position parameter from a maximum audio timestamp, if the pull position parameter is the default value and the audio parameter is true;
determining that the target timestamp is the maximum timestamp, if the pull position parameter is 0 and the audio parameter is a default value or the audio parameter is false;
determining that the target timestamp is the maximum audio timestamp, if the pull position parameter is 0 and the audio parameter is true;
determining that the target timestamp is a value acquired by subtracting an absolute value of the pull position parameter from the maximum timestamp, if the pull position parameter is less than 0 and the audio parameter is a default value or the audio parameter is false;
determining that the target timestamp is a value acquired by subtracting the absolute value of the pull position parameter from the maximum audio timestamp, if the pull position parameter is less than 0 and the audio parameter is true;
determining that the target timestamp is the maximum timestamp, if the pull position parameter is greater than 0, the audio parameter is a default value or the audio parameter is false and timestamp rollback occurs in a buffer region;
determining that the target timestamp is the maximum audio timestamp, if the pull position parameter is greater than 0, the audio parameter is true and the timestamp rollback occurs in the buffer region; and
determining that the target timestamp is the pull position parameter, if the pull position parameter is greater than 0 and no timestamp rollback occurs in the buffer region.

In some embodiments, if the pull position parameter is greater than 0 and no timestamp rollback occurs in the buffer region, said determining the initial frame of the multimedia resource based on the target timestamp includes:
determining the initial frame as the target media frame if the target media frame is present in a currently valid cache region, where a timestamp of the target media frame is greater than or equal to the target timestamp and is closest to the target timestamp; and
entering a waiting state if the target media frame is absent in the currently valid cache region, and determining the initial frame as the target media frame when the target media frame is written into the currently valid cache region.

In some embodiments, the method further includes:
transmitting pull failure information, if the target media frame is absent in the currently valid cache region and a difference between the target timestamp and the maximum timestamp is greater than a time-out threshold.

In some embodiments, if the pull position parameter is greater than 0, the method further includes:
determining that the timestamp rollback occurs in the buffer region if timestamps of media frames in a media frame sequence in the buffer region increase non-monotonically; and
determining that no timestamp rollback occurs in the buffer region if timestamps of media frames in the media frame sequence in the buffer region increase monotonically, where the media frame sequence is a sequence formed by a plurality of media frames that have been buffered in the buffer region.

In some embodiments, the method further includes:
determining that the media frame sequence is in a state of increasing non-monotonically, if a video resource is included in the buffer region and timestamps of key frames in a key frame sequence increase non-monotonically, where the key frame sequence is a sequence formed by a plurality of key frames that have been buffered in the buffer region; and
determining that the media frame sequence is in a state of increasing non-monotonically, if no video resource is included in the buffer region and timestamps of audio frames in an audio frame sequence increase non-monotonically, where the audio frame sequence is a sequence formed by a plurality of audio frames that have been buffered in the buffer region.

In some embodiments, the method further includes:
determining media frames included in the last monotonically increasing stage as a resource in the currently valid cache region.

In some embodiments, determining the initial frame of the multimedia resource based on the target timestamp includes:
determining that the initial frame is a media frame with a timestamp closest to the target timestamp in the currently valid cache region.

In some embodiments, the maximum timestamp is a maximum video timestamp, if the audio parameter is a default value or the audio parameter is false and a video resource is included in the currently valid cache region; and the maximum timestamp is the maximum audio timestamp if no video resource is included in the currently valid cache region.

In some embodiments, acquiring the pull position parameter of the multimedia resource in response to the frame acquisition request of the multimedia resource includes:
acquiring the pull position parameter by parsing the frame acquisition request if the frame acquisition request carries the pull position parameter; and
configuring the pull position parameter as a default value if the frame acquisition request carries no pull position parameter.

In some embodiments, transmitting media frames of the multimedia resource from the initial frame includes:
acquiring address information of the multimedia resource by parsing the frame acquisition request; and
transmitting the media frames of the multimedia resource indicated by the address information from the initial frame.

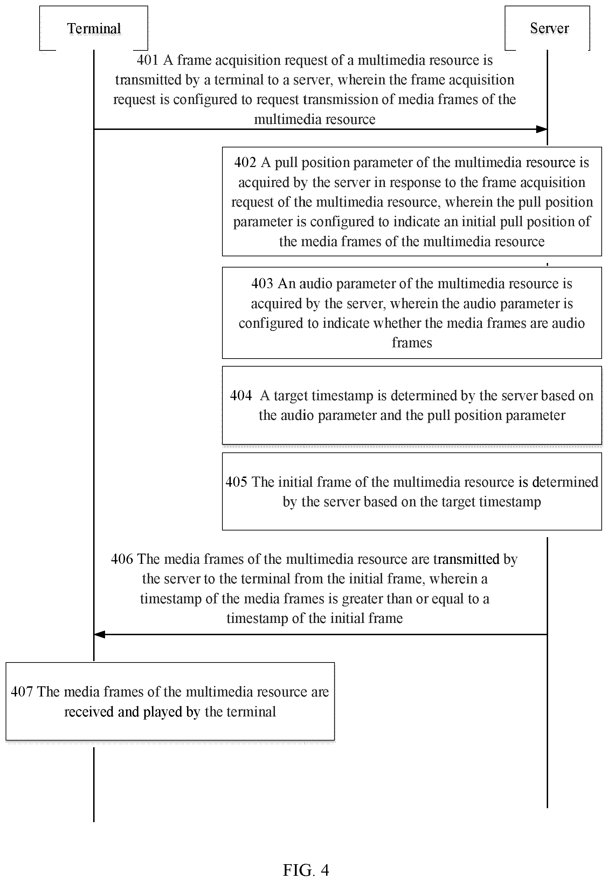

FIG. 4 is an interaction flowchart of a method for transmitting resources according to an embodiment. The method for transmitting resources may be applied to the FAS framework involved in the above-mentioned implementation environment. The embodiment includes the following contents.

In 401, a frame acquisition request of a multimedia resource is transmitted by a terminal to a server, where the frame acquisition request is configured to request transmission of media frames of the multimedia resource.

In the terminal, an application used for browsing multimedia resources may be installed. For example, the application may include at least one of: a short video application, a live broadcast application, a video-on-demand application, a social application or a shopping application, and the embodiments of the present disclosure do not specifically limit the type of the application.

Multimedia resources involved in embodiments of the present disclosure include, but are not limited to at least one of: video resources, audio resources, image resources, or text resources, and the embodiments of the present disclosure do not specifically limit the types of multimedia resources. For example, the multimedia resource is a live video stream of a network anchor, or a historical on-demand video pre-stored on the server, or a live audio stream of a radio anchor, or a historical on-demand audio pre-stored on the server.

In some embodiments, a user may launch the application on the terminal so that the application displays a resource push interface. For example, the resource push interface may be a homepage or a function interface of the application, and the embodiments of the present disclosure do not specifically limit the type of the resource push interface. The resource push interface may include thumbnail information of at least one multimedia resource, and the thumbnail information includes at least one of: a title, an introduction text, a poster, a trailer, or a highlight segment of a multimedia resource. In a process of browsing the resource push interface, the user may click thumbnail information of a multimedia resource of interest. In response to the user's touch operation on the thumbnail information of the multimedia resource, the terminal may redirect from the resource push interface to a resource play interface.

The resource play interface may include a play area and a comment area. The play area may include a play option of the multimedia resource, and the comment area may include other users' viewing comments on the multimedia resource. When the user wants to view the multimedia resource, he/she may click the play option in the resource play interface. In response to the user's touch operation on the play option, the terminal downloads a MPD file of the multimedia resource from the server, determines a target code rate, acquires target address information of the multimedia resource in the target code rate from the MPD file, generates and transmits a frame acquisition request (an FAS request) carrying the target address information to the server.

In some embodiments, the MPD file's format may be JavaScript Object Notation (JSON), or other script format, and the embodiments of the present disclosure do not specifically limit the MPD file format.

In some embodiments, the MPD file may include a version number (@version) and a media description set (@adaptationSet), and may further include a service type (@type), at least one of a function option indicating whether to enable an adaptive function (@HideAuto) or a function option indicating whether to enable the adaptive function by default when a broadcast is started (@autoDefaultSelect). The embodiments of the present disclosure do not specifically limit contents carried by the MPD file.

The version number may include at least one of a version number of the MPD file or a version number of a resource transmission standard (FAS standard).

The media description set is configured to indicate meta-information of multimedia resources. The media description set may include pieces of media description meta-information, each piece of media description meta-information corresponds to multimedia resources with one code rate and may include duration of group of pictures (@gopDuration) and attribute information (@representation) of a multimedia resource in a code rate corresponding to the media description meta-information.

The length of Group of Pictures (GOP) is a distance between two key frames (Intra-Coded Picture, which is also referred to as "I-frame").

Each piece of attribute information may include identification information of the multimedia resource (@id, which is a unique identifier), an encoding mode of the multimedia resource (@codec, which is a codec standard to be complied with), a code rate supported by the multimedia resource (@bitrate, which is the number of data bits transmitted per unit time during resource transmission) and address information of the multimedia resource of the code rate (@url, an URL or domain name provided by the multimedia resource in a certain code rate, and the URL is Uniform Resource Locator). Of course, each piece of attribute information may also include at least one of: quality types of multimedia resources (@qualityType, which includes quality evaluation indexes such as resolution and frame rates), hidden options of multimedia resources (@hiden, which indicates whether a multimedia resource in a certain code rate is visible, that is, whether the user may manually operate the multimedia resource in the code rate), function options indicating whether the multimedia resource is visible relative to an adaptive function (@enableAdaptive, which refers to whether the adaptive function may select a multimedia resource in a certain code rate) or a default play function option (@defaultSelect, which refers to whether to play a multimedia resource in a certain code rate by default when a broadcast is started).

The service type serves to specify a business type of a multimedia resource, including at least one of live broadcast or on-demand broadcast.

When determining a target code rate, the terminal may provide the user with a code rate selection list, and when the user clicks on any value in the code rate selection list, it triggers the generation of a code rate selection instruction carrying the value, and the terminal determines the value carried by the code rate selection instruction as the target code rate in response to the code rate selection instruction.

In some embodiments, the terminal may also adjust the target code rate to a code rate corresponding to current network bandwidth information through the adaptive function. In a process of adaptive adjustment, in addition to the current network bandwidth information, the terminal may also dynamically select the target code rate with the best play effect by considering play status information of the terminal.

In some embodiments, in addition to the target address information, the frame acquisition request may also carry at least one of an audio parameter and a pull position parameter, which are introduced in the following 402 and 403, respectively. Of course, the aforementioned frame acquisition request may not carry the audio parameter and the pull position parameter. In this case, both parameters are defaulted, and the server may allocate and configure default values of the two parameters, which are described in detail in 404 below.

In 402, a pull position parameter of the multimedia resource is acquired by the server in response to the frame acquisition request of the multimedia resource, where the pull position parameter is configured to indicate an initial pull position of the media frames of the multimedia resource.

The pulling position parameter (@fasSpts) is configured for indicating that from which frame specifically the server starts to transmit the media stream. A data type of the pull position parameter may be int64t type, and of course, may also be other data type, and the embodiments of the present disclosure do not specifically limit the data type of the pull position parameter. In the frame acquisition request, the pull position parameter may be equal to 0, greater than 0, less than 0, or default, and different values correspond to different processing logic of the server, which are described in detail in 404 below.

In some embodiments, the server may parse the frame acquisition request to acquire the pull position parameter based on the frame acquisition request carries the pull position parameter. In this case, the terminal specifies the pull position parameter in the frame acquisition request, and the server may directly parse the @fasSpts field of the frame acquisition request to acquire the pull position parameter.

In some embodiments, the server may configure the pull position parameter as a default value, based on the frame acquisition request carries no pull position parameter. In this case, the terminal does not specify a pull position parameter in the frame acquisition request, and then the server may configure the default value for the pull position parameter, and let @fasSpts=defaultSpts. The default value here may be configured by the server according to business scenarios. For example, in a live broadcast business scenario, the defaultSpts may be set as 0, and in an on-demand broadcast business scenario, the defaultSpts may be set as a Presentation Time Stamp (PTS) of a historical media frame at the end of the last viewing. If the PTS of the historical media frame is not recorded in the cache, the defaultSpts is set as a PTS of the first media frame.

In 403, an audio parameter of the multimedia resource is acquired by the server, where the audio parameter is configured to indicate whether the media frames are audio frames.

The audio parameter (@onlyAudio) is configured to indicate a pull mode of a media stream. If the audio parameter is set as true, it means that media frames transmitted by the server to the terminal are audio frames, and the mode is commonly known as a "pure audio mode"; otherwise, if the audio parameter is set as false, it means that media frames transmitted by the server to the terminal are audio and video frames, and the mode is commonly known as a "non-pure audio mode". In the frame acquisition request, the audio parameter may be true, false or default, and different values correspond to different processing logic of the server, which are described in detail in 404 below.

In some embodiments, the server may parse the frame acquisition request to acquire the audio parameter based on the frame acquisition request carries the audio parameter. In this case, the terminal specifies the audio parameter in the frame acquisition request, and the server may directly parse the @onlyAudio field of the frame acquisition request to acquire the audio parameter.

In some embodiments, the server may configure the audio parameter as a default value based on the frame acquisition request carries no audio parameter. In this case, the terminal does not specify an audio parameter in the frame acquisition request, and then the server may configure the default value for the audio parameter. The default value here may be configured by the server according to business scenarios. For example, when video services are provided, the default value is set as false, that is, @onlyAudio = false; or when only audio services are provided, the default value is set as true, that is, @onlyAudio = true. It should be noted that, in the embodiments of the present disclosure, the default value being false is only taken as an example for description. According to different default values, processing logic of the server may be adaptively adjusted, which is not described in detail later.

In 404, a target timestamp is determined by the server based on the audio parameter and the pull position parameter.

In some embodiments, before determining the target timestamp, the server may refresh the currently valid cache region by executing the following 404A-404B.

In 404A, the server determines that the timestamp rollback occurs in the buffer region, if timestamps of media frames in a media frame sequence in the buffer region increase non-monotonically.

Otherwise, the server determines that no timestamp rollback occurs in the buffer region, if timestamps of media frames in the media frame sequence in the buffer region increase monotonically. The media frame sequence is a sequence formed by a plurality of media frames that have been buffered in the buffer region.

The above-mentioned timestamp rollback phenomenon means that media frames in the buffer region are not stored in the order of monotonically increasing timestamps, and there are redundant media frames in the buffer region at this time. This phenomenon usually occurs in a live broadcast business scenario. In a process of pushing a stream to the server by the anchor terminal, media frames transmitted first may arrive at the server later due to network fluctuations, delays, etc., resulting in non-monotonous increasing of timestamps of media frames in the media frame sequence in the buffer region and triggering the timestamp rollback phenomenon. In addition, in order to avoid a problem of packet loss, the anchor terminal usually transmits each media frame multiple times, and this redundant multiple transmission mechanism may also cause the timestamps of media frames in the media frame sequence in the buffer region to be non-monotonous increasing, which triggers the timestamp rollback phenomenon.

When determining whether timestamps of media frames in a media frame sequence increase non-monotonically, the server only needs to start from a media frame with a smallest timestamp in a storage order of the media frame sequence in the buffer region and determine whether there is a media frame with a timestamp greater than a timestamp of the next media frame. If there is any media frame with a timestamp greater than a timestamp of the next media frame, it is determined that timestamps of media frames in the media frame sequence increase non-monotonically and the timestamp rollback occurs in the buffer region; and if timestamps of all media frames are less than or equal to a timestamp of the next media frame, it is determined that timestamps of media frames in the media frame sequence increase monotonically and that no timestamp rollback occurs in the buffer region.

For example, it is assumed that timestamps of media frames in the media frame sequence in the buffer region are [1001, 1002, 1003, 1004, 1005...], and timestamps of media frames in the omission part increase. In this case, timestamps of media frames in the media frame sequence increase monotonically and no timestamp rollback occurs in the buffer region. For another example, it is assumed that timestamps of media frames in the media frame sequence in the buffer region are [1001, 1002, 1003, 1001, 1002, 1003, 1004...], and timestamps of media frames in the omission part increase. In this case, the timestamp (PTS 3 = 1003) of the third media frame is greater than the timestamp (PTS 4 = 1001) of the fourth media frame, and thus timestamps of media frames in the media frame sequence increase non-monotonically and the timestamp rollback occurs in the buffer region.

In some embodiments, a video resource and an audio resource may be discussed separately: for a video resource, when determining whether timestamps of media frames in a media frame sequence increase non-monotonically, it may merely consider whether timestamps of key frames in a key frame sequence of the video resource increase non-monotonically; and for an audio resource, when determining whether timestamps of media frames in a media frame sequence increase non-monotonically, it may consider whether timestamps of audio frames in an audio frame sequence of the audio resource increase non-monotonically.

In other words, it is determined that the media frame sequence is in a state of increasing non-monotonically, if a video resource is included in the buffer region and timestamps of key frames in the key frame sequence increase non-monotonically, where the key frame sequence is a sequence formed by a plurality of key frames that have been buffered in the buffer region; and it is determined that the media frame sequence is in a state of increasing non-monotonically, if no video resource is included in the buffer region and timestamps of audio frames in the audio frame sequence increase non-monotonically, where the audio frame sequence is a sequence formed by a plurality of audio frames that have been buffered in the buffer region.

The reason is that, coding and decoding of I frames do not need to refer to other image frames, and may be achieved by merely using information of the present frame. In contrast, encoding and decoding of both Predictive-coded picture frames (P frames) and Bidirectionally predicted picture frames (B frames) need to refer to other image frames, and cannot be achieved by merely using information of the present frame. For a video resource, after I frames are decoded, P frames and B frames are decoded based on the I frames. Even if a P frame and a B frame corresponding to each of the I frames increase non-monotonically, as long as it is assured that an I frame sequence (only a PTS sequence of the I frame is considered) increases monotonically, it may be believed that no timestamp rollback occurs in the buffer region. On the contrary, once the I frame sequence increases non-monotonically, it may be determined that the timestamp rollback occurs in the buffer region. Of course, if there are no video resource in the buffer region, judgement may be made by directly traversing the PTS sequence of all audio frames, which is not repeated here.

In some embodiments, the timestamp rollback phenomenon may occur more than once, that is, timestamps of media frames in a media frames sequence may be divided into multiple monotonically increasing stages, and timestamps of media frames within each stage increase monotonically, but timestamps of media frames across different stages increase non-monotonically. At this time, there are many redundant and invalid media frames in the buffer region, and the server may execute the following 404B to determine a currently valid cache region.

In 404B, the server determines that media frames included in the last monotonically increasing stage as a resource in the currently valid cache region.

In the above process, the server determines the first media frame in the last monotonically increasing stage in the media frames sequence, and determines all media frames between the above-mentioned first media frame to a media frame with the largest timestamp (equivalent to the latest media frame) in the media frame sequence to be the currently valid cache region, thereby ensuring that media frames in the currently valid cache region increase monotonically.

For example, it is assumed that timestamps of media frames in the media frame sequence in the buffer region are [1001, 1002, 1003, 1001, 1002, 1003, 1004...], and timestamps of media frames in the omission part increase. In this case, the timestamp rollback occurs in the buffer region, and it may be seen that the first media frame in the last monotonically increasing stage is the fourth media frame, then all media frames between the fourth media frame to the latest media frame are determined to be the currently valid cache region. For another example, it is assumed that timestamps of media frames in the media frame sequence in the buffer region are [1001, 1002, 1003, 1001, 1002, 1003, 1001...], and timestamps of media frames in the omission part increase. In this case, the timestamp rollback occurs in the buffer region, and it may be seen that the first media frame in the last monotonically increasing stage is the seventh media frame, then all media frames between the seventh media frame to the latest media frame are determined to be the currently valid cache region.

In some embodiments, a video resource and an audio resource may be discussed separately: if a video resource is included in the buffer region, for the video resource, the server may determine all media frames between the first key frame of the last monotonically increasing stage to the latest media frame as the currently valid cache region by taking I frames of the video resource as calculation points, where a timestamp of the latest video frame may be indicated as latestVideoPts; and if no video resource is included in the buffer region, for an audio resource, the server may determine all media frames between the first audio frame of the last monotonically increasing stage to the latest audio frame as the currently valid cache region by taking audio frames as calculation points, where a timestamp of the latest audio frame may be indicated as latestAudioPts.

In some embodiments, an operation of updating the currently valid cache region may be triggered periodically or manually by a technician. Of course, the currently valid cache region may also be updated every time a frame acquisition request is received, which is referred to as "passive trigger", and the embodiments of the present disclosure do not specifically limit the trigger condition for updating the currently valid cache region.

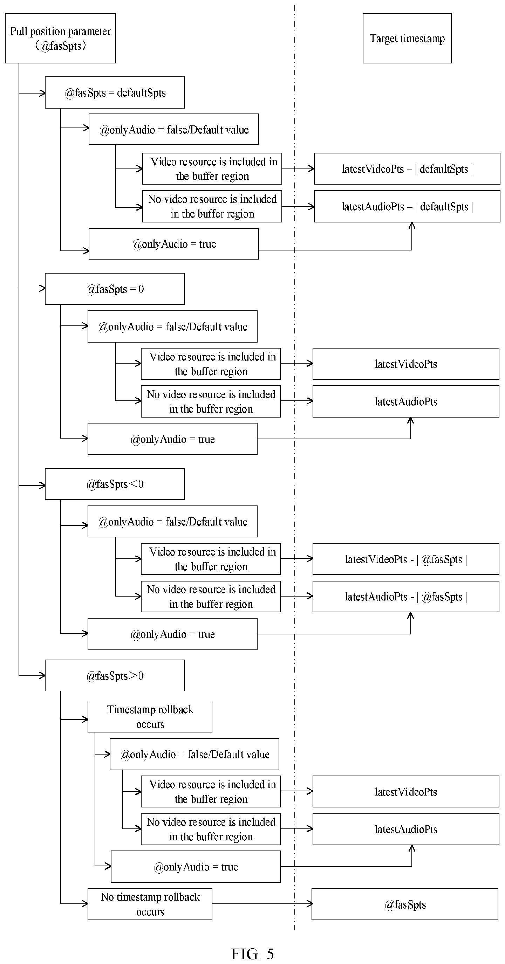

FIG. 5 is a schematic principal diagram of determining a target timestamp according to an embodiment of the present disclosure. As shown in FIG. 5, the server has different processing logic when at different pull position parameters and audio parameter. The processing logic of the server is introduced below. As the value of pull position parameter can be divided into four cases: default value, equal to 0, less than 0, and greater than 0, the four cases are described separately below.

In case 1, the pull position parameter is a default value.

1): A value acquired by subtracting an absolute value of a default value of the pull position parameter from the maximum timestamp is determined by the server as the target timestamp, if the pull position parameter is the default value and the audio parameter is a default value or the audio parameter is false.

The maximum timestamp is the maximum video timestamp latestVideoPts, if a video resource is included in the currently valid cache region; and the maximum timestamp is the maximum audio timestamp latestAudioPts, if no video resource is included in the currently valid cache region.

The above process means that when @fasSpts (the pull position parameter) in the frame acquisition request is default, the server may configure a default value for the pull position parameter, and let @fasSpts = defaultSpts. At this time, if the @onlyAudio (the audio parameter) in the frame acquisition request is also default, the server may configure a default value for the audio parameter (the default value of the audio parameter is false), and let @onlyAudio = false; or if the @onlyAudio field of the frame acquisition request carries a false value, the frame acquisition request specifies that @onlyAudio = false, and the server's processing rules are as follows.

If a video resource is included in the currently valid cache region, the server determines a value acquired from latestVideoPts - | defaultSpts | as the target timestamp; and if no video resource is included in the currently valid cache region, the server determines a value acquired from latestAudioPts - | defaultSpts | as the target timestamp.

2): A value acquired by subtracting an absolute value of a default value of the pull position parameter from the maximum audio timestamp is determined by the server as the target timestamp, if the pull position parameter is the default value and the audio parameter is true.

The above process means that when @fasSpts (the pull position parameter) in the frame acquisition request is default, the server may configure a default value for the pull position parameter, and let @fasSpts = defaultSpts. At this time, if the @onlyAudio field of the frame acquisition request carries a true value, that is, the frame acquisition request specifies @onlyAudio = true (i.e., a pure audio mode, where only audio stream is transmitted). The server's processing rules are as follows: the server determines a value acquired from latestAudioPts - | defaultSpts | as the target timestamp.

In case 2, the pull position parameter is equal to 0.

1): The maximum timestamp is determined as the target timestamp, if the pull position parameter is 0 and the audio parameter is a default value or the audio parameter is false.

The maximum timestamp is the maximum video timestamp latestVideoPts, if a video resource is included in the currently valid cache region; and the maximum timestamp is the maximum audio timestamp latestAudioPts, if no video resource is included in the currently valid cache region.

The above process means that when the @fasSpts field in the frame acquisition request carries a value of 0 (@fasSpts=0), if the @onlyAudio (the audio parameter) in the frame acquisition request is also default, the server may configure a default value for the audio parameter (the default value of the audio parameter is false), and let @onlyAudio = false; or if the @onlyAudio field of the frame acquisition request carries a false value (the frame acquisition request specifies that @onlyAudio = false), the server's processing rules are as follows.

If a video resource is included in the currently valid cache region, the server determines the latestVideoPts as the target timestamp; and if no video resource is included in the currently valid cache region, the server determines the latestAudioPts as the target timestamp.

2): The maximum audio timestamp is determined as the target timestamp, if the pull position parameter is 0 and the audio parameter is true.

The above process means that when the @fasSpts field in the frame acquisition request carries a value of 0 (@fasSpts=0), if the @onlyAudio field in the frame acquisition request carries a true value (the frame acquisition request specifies that @onlyAudio = true), i.e., a pure audio mode, where only audio stream is transmitted, the server's processing rules are as follows: the server determines the latestAudioPts as the target timestamp.

In case 3, the pull position parameter is less than 0.

1): A value acquired by subtracting an absolute value of the pull position parameter from the maximum timestamp is determined as the target timestamp, if the pull position parameter is less than 0 and the audio parameter is a default value or the audio parameter is false.

The maximum timestamp is the maximum video timestamp latestVideoPts, if a video resource is included in the currently valid cache region; and the maximum timestamp is the maximum audio timestamp latestAudioPts, if no video resource is included in the currently valid cache region.

The above process means that when the @fasSpts field in the frame acquisition request carries a value less than 0 (@fasSpts<0), if the @onlyAudio (the audio parameter) in the frame acquisition request is also default, the server may configure a default value for the audio parameter (the default value of the audio parameter is false), and let @onlyAudio = false; or if the @onlyAudio field of the frame acquisition request carries a false value (the frame acquisition request specifies that @onlyAudio = false), the server's processing rules are as follows.

If a video resource is included in the currently valid cache region, the server determines a value acquired from latestVideoPts - | @fasSpts | as the target timestamp; and if no video resource is included in the currently valid cache region, the server determines a value acquired from latestAudioPts - | @fasSpts | as the target timestamp.

2): A value acquired by subtracting an absolute value of the pull position parameter from the maximum audio timestamp is determined as the target timestamp, if the pull position parameter is less than 0 and the audio parameter is true.

The above process means that when the @fasSpts field in the frame acquisition request carries a value less than 0 (@fasSpts<0), if the @onlyAudio field in the frame acquisition request carries a true value (the frame acquisition request specifies that @onlyAudio = true), i.e., a pure audio mode, where only audio stream is transmitted, the server's processing rules are as follows: the server determines the value acquired from latestAudioPts - | @fasSpts | as the target timestamp.

In case 4, the pull position parameter is greater than 0.

1): The maximum timestamp is determined as the target timestamp, if the pull position parameter is greater than 0, the audio parameter is a default value or the audio parameter is false, and the timestamp rollback occurs in the buffer region.

The maximum timestamp is the maximum video timestamp latestVideoPts, if a video resource is included in the currently valid cache region; and the maximum timestamp is the maximum audio timestamp latestAudioPts, if no video resource is included in the currently valid cache region.

The above process means that when the @fasSpts field in the frame acquisition request carries a value greater than 0 (@fasSpts>0), if the @onlyAudio (the audio parameter) in the frame acquisition request is also default, the server may configure a default value for the audio parameter (the default value of the audio parameter is false), and let @onlyAudio = false; or if the @onlyAudio field of the frame acquisition request carries a false value (the frame acquisition request specifies that @onlyAudio = false), the server's processing rules are as follows.

When the timestamp rollback occurs in the buffer region, a) if a video resource is included in the currently valid cache region, the server determines the latestVideoPts as the target timestamp; and b) if no video resource is included in the currently valid cache region, the server determines the latestAudioPts as the target timestamp.

2): The maximum audio timestamp is determined as the target timestamp, if the pull position parameter is greater than 0, the audio parameter is true and the timestamp rollback occurs in the buffer region.

The above process means that when the @fasSpts field in the frame acquisition request carries a value greater than 0 (@fasSpts>0), if the @onlyAudio field in the frame acquisition request carries a true value (the frame acquisition request specifies that @onlyAudio = true), i.e., a pure audio mode, where only audio stream is transmitted, the server's processing rules are as follows: the server determines the latestAudioPts as the target timestamp.

3): The pull position parameter is determined as the target timestamp, if the pull position parameter is greater than 0, the audio parameter is a default value or the audio parameter is false and no timestamp rollback occurs in the buffer region.

The above process means that when the @fasSpts field in the frame acquisition request carries a value greater than 0 (@fasSpts>0), if the @onlyAudio (the audio parameter) in the frame acquisition request is also default, the server may configure a default value for the audio parameter (the default value of the audio parameter is false), and let @onlyAudio = false; or if the @onlyAudio field of the frame acquisition request carries a false value (the frame acquisition request specifies that @onlyAudio = false), the server's processing rules are as follows: when no timestamp rollback occurs in the buffer region, the server determines the @fasSpts as the target timestamp.

4): The pull position parameter is determined as the target timestamp, if the pull position parameter is greater than 0, the audio parameter is true and no timestamp rollback occurs in the buffer region.

The above process means that when the @fasSpts field in the frame acquisition request carries a value greater than 0 (@fasSpts>0), if the @onlyAudio field in the frame acquisition request carries a true value (the frame acquisition request specifies that @onlyAudio = true), i.e., a pure audio mode, where only audio stream is transmitted, the server's processing rules are as follows: when no timestamp rollback occurs in the buffer region, the server determines the @fasSpts as the target timestamp.

In view of the discussions in the above cases 3) and 4), it may be seen that when the pull position parameter is greater than 0 (@fasSpts>0) and no timestamp rollback occur in the buffer, no matter whether the audio parameter is true, false or the default value, the server always determines the pull position parameter as the target timestamp.

Reference may be made to the above-mentioned 404A for an operation that the server determines whether timestamp rollback occurs in each of the above cases, and reference may be made to the above-mentioned 404B for an operation that the server updates the currently valid cache region, which are not repeated here.

Based on the above descriptions, when the pull position parameter has different values, the server may perform corresponding processing logic to determine the target timestamp which is used for determining the initial frame of the multimedia resource in 405 below.

In 405, the initial frame of the multimedia resource is determined by the server based on the target timestamp.

In some embodiments, the server may determine the initial frame by the following mode 1.

In the mode 1, a media frame with a timestamp closest to the target timestamp in the currently valid cache region is determined as the initial frame by the server.

In some embodiments, when the audio parameter is default or the audio parameter is false and a video resource is included in the currently valid cache region, a key frame (I frame) of the video resource with a timestamp closest to the target timestamp is determined as the initial frame; and when no video resource is included in the currently valid cache region, an audio frame with a timestamp closest to the target timestamp is determined as the initial frame.

In some embodiments, when the audio parameter is true, the server may directly determine an audio frame with a timestamp closest to the target timestamp as the initial frame.

In some embodiments, a method for determining the initial frame includes:
A): When @fasSpts = defaultSpts, the @onlyAudio is default or @onlyAudio = false, referring to the example 1) in the case 1 of the above-mentioned 404, if a video resource is included in the currently valid cache region and the target timestamp is latestVideoPts - | defaultSpts |, the server determines an I frame with a PTS closest to latestVideoPts - | defaultSpts | as the initial frame; and if no video resource is included in the currently valid cache region and the target timestamp is latestAudioPts - | defaultSpts |, the server determines an audio frame with a PTS closest to latestAudioPts - | defaultSpts | as the initial frame.
B): When @fasSpts = defaultSpts, and @onlyAudio = true, referring to the example 2) in the case 1 of the above-mentioned 404, the target timestamp is latestAudioPts - | defaultSpts |, and the server determines an audio frame with a PTS closest to latestAudioPts - | defaultSpts | as the initial frame.
C): When @fasSpts = 0, the @onlyAudio is default or @onlyAudio = false, referring to the example 1) in the case 2 of the above-mentioned 404, if a video resource is included in the currently valid cache region and the target timestamp is the latestVideoPts, the server determines an I frame with a PTS closest to the latestVideoPts as the initial frame; and if no video resource is included in the currently valid cache region and the target timestamp is the latestAudioPts, the server determines an audio frame with a PTS closest to the latestAudioPts as the initial frame.
D): When @fasSpts = 0, and @onlyAudio = true, referring to the example 2) in the case 2 of the above-mentioned 404, the target timestamp is the latestAudioPts, and the server determines an audio frame with a PTS closest to the latestAudioPts as the initial frame.
E): When @fasSpts<0, the @onlyAudio is default or @onlyAudio = false, referring to the example 1) in the case 3 of the above-mentioned 404, if a video resource is included in the currently valid cache region and the target timestamp is latestVideoPts - | @fasSpts |, the server determines an I frame with a PTS closest to latestVideoPts - | @fasSpts | as the initial frame; on the contrary, if no video resource is included in the currently valid cache region and the target timestamp is latestAudioPts - | @fasSpts |, the server determines an audio frame with a PTS closest to latestAudioPts - | @fasSpts | as the initial frame.
F): When @fasSpts<0, and @onlyAudio = true, referring to the example 2) in the case 3 of the above-mentioned 404, the target timestamp is latestAudioPts - | @fasSpts |, and the server determines an audio frame with a PTS closest to latestAudioPts - | @fasSpts | as the initial frame.
G): When @fasSpts > 0, the @onlyAudio is default or @onlyAudio = false and the timestamp rollback occurs in the buffer region, referring to the example 1) in the case 4 of the above-mentioned 404, if a video resource is included in the currently valid cache region and the target timestamp is the latestVideoPts, the server determines an I frame with a PTS closest to the latestVideoPts (i.e., the latest I fame) as the initial frame; and if no video resource is included in the currently valid cache region and the target timestamp is the latestAudioPts, the server determines an audio frame with a PTS closest to the latestAudioPts (i.e., the latest audio frame) as the initial frame.
H): When @fasSpts > 0, @onlyAudio = true and the timestamp rollback occurs in the buffer region, referring to the example 2) in the case 4 of the above-mentioned 404, the target timestamp is the latestAudioPts, and the server determines an audio frame with a PTS closest to the latestAudioPts (i.e., the latest audio frame) as the initial frame.

Similarly, when @fasSpts > 0, for the rest discussion in the case 4 of the above-mentioned 404, after determining the target timestamp, the server may also determine a media frame in the currently valid cache region with a timestamp closest to the target timestamp as the initial frame by the above mode 1, and no enumeration is made here.

In some embodiments, when @fasSpts > 0, in addition to the above mode 1, the server may also determine the media frame through the following mode 2.

In the mode 2, the target media frame is determined as the initial frame by the server if the target media frame is present in the currently valid cache region, and a timestamp of the target media frame is greater than or equal to the target timestamp and is closest to the target timestamp.

In some embodiments, when the audio parameter is default or the audio parameter is false and a video resource is included in the currently valid cache region, the target media frame is an I frame in the video resource; and when no video resource is included in the currently valid cache region, the target media frame is an audio frame.

In some embodiments, when the audio parameter is true, the target media frame is an audio frame.

In some embodiments, a method for determining the initial frame includes:
I): When @fasSpts >0, the @onlyAudio is default or @onlyAudio = false, and no timestamp rollback occurs in the buffer region, referring to the example 3) in the case 4 of the above-mentioned 404, in this case the target timestamp is @fasSpts. If a video resource is included in the currently valid cache region, the server may traverse I frames of the video resource individually from an I frame with the smallest PTS in a direction along which PTSs of the media frames increase, until the first I frame for which PTS ≥ @fasSpts (the target media frame) is found, which indicates the presence of the target media frame in the currently valid cache region, and the server determines the above-mentioned target media frame as the initial frame; and if no video resource is included in the currently valid cache region, the server may traverse audio frames individually from an audio frame with the smallest PTS in a direction along which PTSs of the audio frames increase, until the first audio frame for which PTS ≥ @fasSpts (the target media frame) is found, which indicates the presence of the target media frame in the currently valid cache region, and the server determines the above-mentioned target media frame as the initial frame.
J): When @fasSpts >0, @onlyAudio = true, and no timestamp rollback occurs in the buffer region, referring to the example 4) in the case 4 of the above-mentioned 404, at this time the target timestamp is @fasSpts, the server may traverse audio frames individually from an audio frame with the smallest PTS in a direction along which PTSs of the audio frames increase, until the first audio frame for which PTS ≥ @fasSpts (the target media frame) is found, which indicates the presence of the target media frame in the currently valid cache region, and the server determines the above-mentioned target media frame as the initial frame.

The mode 2 provides how the server determines the initial frame when the target media frame may be found in the currently valid cache region. However, in some embodiments, the target media frame may not be found in the currently valid cache region. This case usually occurs in a live broadcast business scenario, where a frame acquisition request specified by the audience terminal to pull @fasSpts arrives at the server first, while media frames (live broadcast video frames) corresponding to @fasSpts are still in a transmission process of a stream pushing stage, and the server may also determine the initial frame by the following mode 3 in this case.

In the mode 3, if the target media frame is absent in the currently valid cache region, the server enters a waiting state until the target media frame is written into the currently valid cache region and the server determines the target media frame as the initial frame, , where a timestamp of the target media frame is greater than or equal to the target timestamp and is closest to the target timestamp.

In some embodiments, when the audio parameter is default or the audio parameter is false and a video resource is included in the currently valid cache region, the target media frame is an I frame in the video resource; and when no video resource is included in the currently valid cache region, the target media frame is an audio frame.

In some embodiments, when the audio parameter is true, the target media frame is an audio frame.

In some embodiments, a method for determining the initial frame includes:
K): When @fasSpts >0, the @onlyAudio is default or @onlyAudio = false, and no timestamp rollback occurs in the buffer region, referring to the example 3) in the case 4 of the above-mentioned 404, in this case the target timestamp is @fasSpts. If a video resource is included in the currently valid cache region, the server may traverse I frames of the video resource individually from an I frame with the smallest PTS in a direction along which PTSs of the media frames increase, if no I frame for which PTS ≥ @fasSpts (the target media frame) is found after traversing all of the I frames, it indicates the absence of the target media frame in the currently valid cache region, and the server enters a waiting state, waits for the first I frame for which PTS ≥ @fasSpts (the target media frame) is written into the currently valid cache region, and determines the target media frame as the initial frame ; and if no video resource is included in the currently valid cache region, the server may traverse audio frames individually from an audio frame with the smallest PTS in a direction along which PTSs of the audio frames increase, if no audio frame for which PTS ≥ @fasSpts (the target media frame) is found after traversing all of the audio frames, it indicates the absence of the target media frame in the currently valid cache region, and the server enters a waiting state, waits for the first audio frame for which PTS ≥ @fasSpts (the target media frame) is written into the currently valid cache region, and determines the target media frame as the initial frame when.
L): When @fasSpts >0, @onlyAudio = true, and no timestamp rollback occurs in the buffer region, referring to the example 4) in the case 4 of the above-mentioned 404, in this case the target timestamp is @fasSpts. The server may traverse audio frames individually from an audio frame with the smallest PTS in a direction along which PTSs of the audio frames increase, if no audio frame for which PTS ≥ @fasSpts (the target media frame) is found after traversing all of the audio frames, it indicates the absence of the target media frame in the currently valid cache region, and the server enters a waiting state, waits for the first audio frame for which PTS ≥ @fasSpts (the target media frame) is written into the currently valid cache region, and determines the target media frame as the initial frame when.

The mode 3 provides how the server determines the initial frame when the target media frame may not be found in the currently valid cache region. In some embodiments, an abnormal situation may result in a large abnormal value of the @fasSpts carried in the frame acquisition request. In this case, a process in which the mode 3 is used may require long waiting time. In a big data scenario, if there are concurrent frame acquisition requests with exceptions, all of these frame acquisition requests enter a blocked waiting state, which may occupy processing resources of the server and cause great losses to performances of the server.

Therefore, the server may also set a time-out threshold, so as to determine whether it is necessary to return pull failure information based on the time-out threshold through the following mode 4 which is described in detail below.

In the mode 4, pull failure information is transmitted by the server, if the target media frame is absent in the currently valid cache region and a difference between the target timestamp and the maximum timestamp is greater than the time-out threshold, where a timestamp of the target media frame is greater than or equal to the target timestamp and is closest to the target timestamp.

In some embodiments, the maximum timestamp is the maximum video timestamp latestVideoPts, if the audio parameter is default or the audio parameter is false and a video resource is included in the currently valid cache region; and the maximum timestamp is the maximum audio timestamp latestAudioPts if no video resource is included in the currently valid cache region.

In some embodiments, when the audio parameter is true, the maximum timestamp is the maximum audio timestamp latestAudioPts.

Assuming that the time-out threshold is timeoutPTS, the time-out threshold may be any value greater than or equal to 0, may be a value preset by the server, or may be personalized by a technician based on business scenarios, and the embodiments of the present disclosure do not specifically limit an acquisition mode of the time-out threshold, for example:
M): When @fasSpts >0, the @onlyAudio is default or @onlyAudio = false, and no timestamp rollback occurs in the buffer region, referring to the example 3) in the case 4 of the above-mentioned 404, in this case the target timestamp is @fasSpts. If a video resource is included in the currently valid cache region, the server may traverse I frames of the video resource individually from an I frame with the smallest PTS in a direction along which PTSs of the media frames increase, if no I frame for which PTS ≥ @fasSpts (the target media frame) is found after traversing all of the I frames, it indicates the absence of the target media frame in the currently valid cache region, then the server determines whether a difference between the @fasSpts and the latestVideoPts is greater than the timeoutPTS, if @fasSpts - latestVideoPts >timeoutPTS, the server transmits the pull failure information to the terminal; and if @fasSpts - latestVideoPts ≤ timeoutPTS, the server may enter the waiting state, which corresponds to an operation performed in a situation corresponding to the example K) in the above-mentioned mode 3; and if no video resource is included in the currently valid cache region, the server may traverse audio frames individually from an audio frame with the smallest PTS in a direction along which PTSs of the audio frames increase, if no audio frame for which PTS ≥ @fasSpts (the target media frame) is found after traversing all of the audio frames, it indicates the absence of the target media frame in the currently valid cache region, then the server may determine whether a difference between the @fasSpts and the latestAudioPts is greater than the timeoutPTS, if @fasSpts - latestAudioPts > timeoutPTS, the server transmits the pull failure information to the terminal; and if @fasSpts - latestAudioPts ≤ timeoutPTS, the server may enter the waiting state, which corresponds to an operation performed in the situation corresponding to the example K) in the above-mentioned mode 3.
N): When @fasSpts >0, @onlyAudio = true, and no timestamp rollback occurs in the buffer region, referring to the example 4) in the case 4 of the above-mentioned 404, in this case the target timestamp is @fasSpts. The server may traverse audio frames individually from an audio frame with the smallest PTS in a direction along which PTSs of the audio frames increase, if no audio frame for which PTS ≥ @fasSpts (the target media frame) is found after traversing all of the audio frames, it indicates the absence of the target media frame in the currently valid cache region, and the server may determine whether a difference between the @fasSpts and the latestAudioPts is greater than the timeoutPTS, if @fasSpts - latestAudioPts > timeoutPTS, the server transmits the pull failure information to the terminal; and if @fasSpts - latestAudioPts ≤ timeoutPTS, the server may enter the waiting state, which corresponds to an operation performed in the situation corresponding to the example L) in the above-mentioned mode 3.

A combination of the above-mentioned mode 3 and mode 4 provides abnormality handling logic for a case where @fasSpts > 0 and no target media frame is present in the currently valid cache region. If a difference between the target timestamp and the maximum timestamp is less than or equal to the time-out threshold, the server enters a waiting state in the mode 3 (i.e., a waiting mode) until the target media frame arrives, and determines the target media frame as the initial frame. If the difference between the target timestamp and the maximum timestamp is greater than the time-out threshold, the server transmits the pull failure information in the mode 4 (i.e., an error handling mode), and at this time, the server determines that the frame acquisition request is wrong and directly returns the pull failure information to the terminal, the pull failure information may be in the form of an error code.

In the above-mentioned 403 to 405, the server determines the initial frame of the multimedia resource based on the pull position parameter of the multimedia resource. Further, in a scenario where it is required to dynamically switch code rates, transmission of media frames in a new code rate from any specified initial frame may be implemented by merely modifying address information (@url field) and a pull position parameter (@fasSpts field) carried in the frame acquisition request.

In 406, the media frames of the multimedia resource are transmitted by the server to the terminal from the initial frame, where a timestamp of the media frames is greater than or equal to a timestamp of the initial frame.

In the above-mentioned 406, the server may parse and acquire address information of the multimedia resource based on the frame acquisition request, and transmit media frames of the multimedia resource indicated by the address information from the initial frame. In some embodiments, since the address information carried in the frame acquisition request corresponds to a target code rate, the server may transmit a media stream from the initial frame in the target code rate.

In the above process, the server may continuously transmit media frames to the terminal like streaming water, which may be vividly referred to as "media streaming".

In some embodiments, if the server is a CDN server, the target address information may be a domain name. The terminal may transmit a frame acquisition request to a central platform of the CDN server, and the central platform calls a Domain Name System (DNS, which is essentially a domain name resolution library) to parse the domain name to acquire a CNAME (alias) record corresponding to the domain name. Based on geographic information of the terminal, the CNAME record is parsed again to acquire an Internet Protocol (IP) address of an edge server closest to the terminal. At this time, the central platform directs the frame acquisition request to the aforementioned edge server, and the edge server provides the terminal with media frames of the multimedia resource in the target code rate in response to the frame acquisition request.

In some embodiments, the embodiments of the present disclosure provide a CDN server internal back-to-source mechanism. In a CDN system, it is possible that the edge server may not provide the multimedia resource specified by the frame acquisition request. At this time, the edge server may pull a media stream from an upper-level node device in a back-to-source mode.

Specifically, the edge server may transmit a back-to-source pull request to the upper-level node device, then the upper-level node device returns a corresponding media stream to the edge server in response to the back-to-source pull request, and the edge server transmits the corresponding media stream to the terminal.

In the above process, when acquiring the back-to-source pull request, the edge server may directly determine the frame acquisition request as the back-to-source pull request upon the presence of the @fasSpts field in the frame acquisition request transmitted by the terminal, and forward the back-to-source pull request to the upper-level node device. On the contrary, upon the absence of the @fasSpts field in the frame acquisition request transmitted by the terminal, the edge server needs to acquire a back-to-source pull request by configuring a default value of defaultSpts for the @fasSpts field, embedding the @fasSpts field into the frame acquisition request, and setting a value stored in the @fasSpts field to the defaultSpts.

In some embodiments, the upper-level node device may be a third-party source server. In this case, the back-to-source pull request must carry the @fasSpts field. In some embodiments, the upper-level node device may also be a node server (such as a node device for a central platform or for a distributed database system) inside the CDN system. Upon the presence of the @fasSpts field in the frame acquisition request, a process of back-to-source may be performed according to an actual value of the @fasSpts field; otherwise, the process of back-to-source may be performed according to the default value @fasSpts = defaultSpts, and the embodiments of the present disclosure do not specifically limit the back-to-source mode of the edge server.

In 407, the terminal receives media frames of the multimedia resource, and plays media frames of the multimedia resource.

In the above process, when receiving media frames of the multimedia resource (continuously received media frames may constitute a media stream), in order to ensure smoothness of play, the terminal may store the media frames into the buffer region and decode the media frames by calling the media codec component to acquire the decoded media frames, and play the media frames in the buffer region in order of increasing PTSs by calling the media play component.

During the decoding process, the terminal may determine an encoding mode of the multimedia resource according to the @codec field of an MPD file, determine a corresponding decoding mode according to the encoding mode, so as to decode the media frames according to the determined decoding mode.

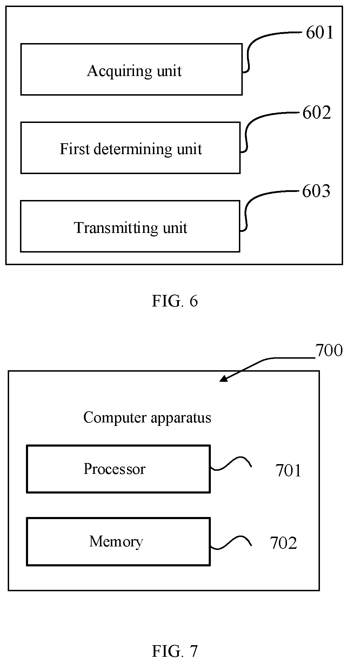

FIG. 6 is a block diagram of a logical structure of a device for transmitting resources according to an embodiment. Referring to FIG. 6, the device includes an acquiring unit 601, a first determining unit 602, and a transmitting unit 603, which are described below.

The acquiring unit 601 is configured to acquire a pull position parameter of a multimedia resource in response to a frame acquisition request of the multimedia resource, where the frame acquisition request is configured to request transmission of media frames of the multimedia resource, and the pull position parameter is configured to indicate an initial pull position of the media frames of the multimedia resource.

The first determining unit 602 is configured to determine an initial frame of the multimedia resource based on the pull position parameter of the multimedia resource.

The transmitting unit 603 is configured to transmit the media frames of the multimedia resource from the initial frame, where a timestamp of the media frames is greater than or equal to a timestamp of the initial frame.

In some embodiments, the acquiring unit 601 is further configure to acquire an audio parameter of the multimedia resource, where the audio parameter is configured to indicate whether the media frames are audio frames.

According to the device composition of FIG. 6, the first determining unit 602 includes:
a first determining sub-unit configured to determine a target timestamp based on the audio parameter and the pull position parameter; and
a second determining sub-unit configured to determine the initial frame of the multimedia resource based on the target timestamp.

In some embodiments, the first determining sub-unit is configured to perform the following operations:
determining that the target timestamp is a value acquired by subtracting an absolute value of a default value of the pull position parameter from a maximum timestamp, if the pull position parameter is the default value and the audio parameter is a default value or the audio parameter is false;
determining that the target timestamp is a value acquired by subtracting the absolute value of the default value of the pull position parameter from a maximum audio timestamp, if the pull position parameter is the default value and the audio parameter is true;
determining that the target timestamp is the maximum timestamp, if the pull position parameter is 0 and the audio parameter is a default value or the audio parameter is false;
determining that the target timestamp is the maximum audio timestamp, if the pull position parameter is 0 and the audio parameter is true;
determining that the target timestamp is a value acquired by subtracting an absolute value of the pull position parameter from the maximum timestamp, if the pull position parameter is less than 0 and the audio parameter is a default value or the audio parameter is false;
determining that the target timestamp is a value acquired by subtracting the absolute value of the pull position parameter from the maximum audio timestamp, if the pull position parameter is less than 0 and the audio parameter is true;
determining that the target timestamp is the maximum timestamp, if the pull position parameter is greater than 0, the audio parameter is a default value or the audio parameter is false and timestamp rollback occurs in a buffer region;
determining that the target timestamp is the maximum audio timestamp, if the pull position parameter is greater than 0, the audio parameter is true and the timestamp rollback occurs in the buffer region; and
determining that the target timestamp is the pull position parameter, if the pull position parameter is greater than 0 and no timestamp rollback occurs in the buffer region.

In some embodiments, if the pull position parameter is greater than 0 and no timestamp rollback occurs in the buffer region, the second determining sub-unit is configured to perform the following operations:
determining the initial frame as the target media frame if the target media frame is present in a currently valid cache region, where a timestamp of the target media frame is greater than or equal to the target timestamp and is closest to the target timestamp; and
entering a waiting state until the target media frame is written into the currently valid cache region, and determining the initial frame as the target media frame, if the target media frame is absent in the currently valid cache region.

In some embodiments, the transmitting unit 603 is further configured to perform the following operation:
transmitting pull failure information, if the target media frame is absent in the currently valid cache region and a difference between the target timestamp and the maximum timestamp is greater than a time-out threshold.

In some embodiments, if the pull position parameter is greater than 0, the device further includes:
a second determining unit configured to determine that the timestamp rollback occurs in the buffer region if timestamps of media frames in the media frame sequence in the buffer region increase non-monotonically; and determine that no timestamp rollback occurs in the buffer region if timestamps of media frames in the media frame sequence in the buffer region increase monotonically, where the media frame sequence is a sequence formed by a plurality of media frames that have been buffered in the buffer region.

In some embodiments, the second determining unit is further configured to perform the following operations:
determining that the media frame sequence is in a state of increasing non-monotonically, if a video resource is included in the buffer region and timestamps of key frames in a key frame sequence increase non-monotonically, where the key frame sequence is a sequence formed by a plurality of key frames that have been buffered in the buffer region; and
determining that the media frame sequence is in a state of increasing non-monotonically, if no video resource is included in the buffer region and timestamps of audio frames in an audio frame sequence increase non-monotonically, where the audio frame sequence is a sequence formed by a plurality of audio frames that have been buffered in the buffer region.

In some embodiments, according to the device composition of FIG. 6, the device further includes:
a third determining unit configured to determine media frames included in the last monotonically increasing stage as a resource in the currently valid cache region.

In some embodiments, the second determining sub-unit is configured to perform the following operation:
determining that the initial frame is a media frame with a timestamp closest to the target timestamp in the currently valid cache region.

In some embodiments, the maximum timestamp is the maximum video timestamp, if the audio parameter is a default value or the audio parameter is false and a video resource is included in a currently valid cache region; and the maximum timestamp is the maximum audio timestamp, if no video resource is included in the currently valid cache region.

In some embodiments, the acquiring unit 601 is configured to perform the following operation:
acquiring the pull position parameter by parsing the frame acquisition request if the frame acquisition request carries the pull position parameter; and
configuring the pull position parameter as a default value if the frame acquisition request carries no pull position parameter.

In some embodiments, the transmitting unit 603 is configured to perform the following operation:
acquiring address information of the multimedia resource by parsing the frame acquisition request; and
transmitting the media frames of the multimedia resource indicated by the address information from the initial frame.

FIG. 7 is a schematic structural diagram of a computer apparatus according to an embodiment of the present disclosure. The computer apparatus may be a server in the FAS framework. The computer apparatus 700 may have relatively large differences due to different configurations or performances, and may include one or more processors (Central Processing Units, CPU) 701 and one or more memories 702. At least one program code is stored in the memory 702, and the at least one program code, when loaded and executed by the processor 701, causes the processor 701 to implement the method for transmitting resources according to the foregoing embodiments. Of course, the computer apparatus 700 may also have components such as a wired or wireless network interface, a keyboard, and an input/output interface for input and output. The computer apparatus 700 may also include other components for implementing device functions, which are omitted here.

In some embodiments, the computer apparatus includes one or more processors, and one or more memories for storing an instruction executable by the one or more processors, and the one or more processors are configured to execute the instruction to perform the following operations:
acquiring a pull position parameter of a multimedia resource in response to a frame acquisition request of the multimedia resource, where the frame acquisition request is configured to request transmission of media frames of the multimedia resource, and the pull position parameter is configured to indicate an initial pull position of the media frames of the multimedia resource;
determining an initial frame of the multimedia resource based on the pull position parameter of the multimedia resource; and
transmitting the media frames of the multimedia resource from the initial frame, where a timestamp of the media frames is greater than or equal to a timestamp of the initial frame.

In some embodiments, the one or more processors are configured to execute the instruction to implement the following operations:
acquiring an audio parameter of the multimedia resource, where the audio parameter is configured to indicate whether the media frames are audio frames;
determining a target timestamp based on the audio parameter and the pull position parameter; and
determining the initial frame of the multimedia resource based on the target timestamp.

In some embodiments, the one or more processors are configured to execute the instruction to implement the following operations:
determining that the target timestamp is a value acquired by subtracting an absolute value of a default value of the pull position parameter from a maximum timestamp, if the pull position parameter is the default value and the audio parameter is a default value or the audio parameter is false;
determining that the target timestamp is a value acquired by subtracting the absolute value of the default value of the pull position parameter from a maximum audio timestamp, if the pull position parameter is the default value and the audio parameter is true;
determining that the target timestamp is the maximum timestamp, if the pull position parameter is 0 and the audio parameter is a default value or the audio parameter is false;
determining that the target timestamp is the maximum audio timestamp, if the pull position parameter is 0 and the audio parameter is true;
determining that the target timestamp is a value acquired by subtracting an absolute value of the pull position parameter from the maximum timestamp, if the pull position parameter is less than 0 and the audio parameter is a default value or the audio parameter is false;
determining that the target timestamp is a value acquired by subtracting the absolute value of the pull position parameter from the maximum audio timestamp, if the pull position parameter is less than 0 and the audio parameter is true;
determining that the target timestamp is the maximum timestamp, if the pull position parameter is greater than 0, the audio parameter is a default value or the audio parameter is false and timestamp rollback occurs in a buffer region;
determining that the target timestamp is the maximum audio timestamp, if the pull position parameter is greater than 0, the audio parameter is true and the timestamp rollback occurs in the buffer region; and
determining that the target timestamp is the pull position parameter, if the pull position parameter is greater than 0 and no timestamp rollback occurs in the buffer region.

In some embodiments, if the pull position parameter is greater than 0 and no timestamp rollback occurs in the buffer region, the one or more processors are configured to execute the instruction to implement the following operations:
determining the initial frame as the target media frame if the target media frame is present in a currently valid cache region, where a timestamp of the target media frame is greater than or equal to the target timestamp and is closest to the target timestamp; and
entering a waiting state until the target media frame is written into the currently valid cache region, and determining the initial frame as the target media frame, if the target media frame is absent in the currently valid cache region.

In some embodiments, the one or more processors are further configured to execute the instruction to implement the following operation:
transmitting pull failure information, if the target media frame is absent in the currently valid cache region and a difference between the target timestamp and the maximum timestamp is greater than a time-out threshold.

In some embodiments, if the pull position parameter is greater than 0, the one or more processors are further configured to execute the instruction to implement the following operations:
determining that the timestamp rollback occurs in the buffer region if timestamps of media frames in a media frame sequence in the buffer region increase non-monotonically; and
determining that no timestamp rollback occurs in the buffer region if timestamps of media frames in the media frame sequence in the buffer region increase monotonically, where the media frame sequence is a sequence formed by a plurality of media frames that have been buffered in the buffer region.

In some embodiments, the one or more processors are further configured to execute the instruction to implement the following operations:
determining that the media frame sequence is in a state of increasing non-monotonically, if a video resource is included in the buffer region and timestamps of key frames in a key frame sequence increase non-monotonically, where the key frame sequence is a sequence formed by a plurality of key frames that have been buffered in the buffer region; and
determining that the media frame sequence is in a state of increasing non-monotonically, if no video resource is included in the buffer region and timestamps of audio frames in an audio frame sequence increase non-monotonically, where the audio frame sequence is a sequence formed by a plurality of audio frames that have been buffered in the buffer region.

In some embodiments, the one or more processors are further configured to execute the instruction to implement the following operation:
determining media frames included in the last monotonically increasing stage as a resource in the currently valid cache region.

In some embodiments, the one or more processors are configured to execute the instruction to implement the following operation:
determining that the initial frame is a media frame with a timestamp closest to the target timestamp in the currently valid cache region.

In some embodiments, the maximum timestamp is the maximum video timestamp, if the audio parameter is a default value or the audio parameter is false and a video resource is included in a currently valid cache region; and the maximum timestamp is the maximum audio timestamp if no video resource is included in the currently valid cache region.

In some embodiments, the one or more processors are configured to execute the instruction to implement the following operations:
acquiring the pull position parameter by parsing the frame acquisition request if the frame acquisition request carries the pull position parameter; and
configuring the pull position parameter as a default value if the frame acquisition request carries no pull position parameter.

In some embodiments, the one or more processors are configured to execute the instruction to implement the following operations:
acquiring address information of the multimedia resource by parsing the frame acquisition request; and
transmitting the media frames of the multimedia resource indicated by the address information from the initial frame.

In some embodiments, a storage medium including at least one instruction is provided, for example, a storage device including at least one instruction, where the at least one instruction, when executed by a processor of a computer apparatus, causes the computer apparatus to implement the method for transmitting resources in the foregoing embodiments. In some embodiments, the foregoing storage medium may be a non-transitory computer-readable storage medium. For example, the non-transitory computer-readable storage medium may include a Read-Only Memory (ROM), a Random-Access Memory (RAM), a Compact Disc Read-Only Memory (CD-ROM), a magnetic tape, a floppy disk and an optical data storage device, etc.

In some embodiments, the at least one instruction in the storage medium, when executed by one or more processors of a computer apparatus, causes the computer apparatus to implement the following operations:
acquiring a pull position parameter of a multimedia resource in response to a frame acquisition request of the multimedia resource, where the frame acquisition request is configured to request transmission of media frames of the multimedia resource, and the pull position parameter is configured to indicate an initial pull position of the media frames of the multimedia resource;
determining an initial frame of the multimedia resource based on the pull position parameter of the multimedia resource; and
transmitting the media frames of the multimedia resource from the initial frame, where a timestamp of the media frames is greater than or equal to a timestamp of the initial frame.

In some embodiments, the one or more processors of the computer apparatus are configured to implement the following operations:
acquiring an audio parameter of the multimedia resource, where the audio parameter is configured to indicate whether the media frames are audio frames;
determining a target timestamp based on the audio parameter and the pull position parameter; and
determining the initial frame of the multimedia resource based on the target timestamp.

In some embodiments, the one or more processors of the computer apparatus are configured to implement the following operations:
determining that the target timestamp is a value acquired by subtracting an absolute value of a default value of the pull position parameter from a maximum timestamp, if the pull position parameter is the default value and the audio parameter is a default value or the audio parameter is false;
determining that the target timestamp is a value acquired by subtracting the absolute value of the default value of the pull position parameter from a maximum audio timestamp, if the pull position parameter is the default value and the audio parameter is true;
determining that the target timestamp is the maximum timestamp, if the pull position parameter is 0 and the audio parameter is a default value or the audio parameter is false;
determining that the target timestamp is the maximum audio timestamp, if the pull position parameter is 0 and the audio parameter is true;
determining that the target timestamp is a value acquired by subtracting an absolute value of the pull position parameter from the maximum timestamp, if the pull position parameter is less than 0 and the audio parameter is a default value or the audio parameter is false;
determining that the target timestamp is a value acquired by subtracting the absolute value of the pull position parameter from the maximum audio timestamp, if the pull position parameter is less than 0 and the audio parameter is true;
determining that the target timestamp is the maximum timestamp, if the pull position parameter is greater than 0, the audio parameter is a default value or the audio parameter is false and timestamp rollback occurs in a buffer region;
determining that the target timestamp is the maximum audio timestamp, if the pull position parameter is greater than 0, the audio parameter is true and the timestamp rollback occurs in the buffer region; and
determining that the target timestamp is the pull position parameter, if the pull position parameter is greater than 0 and no timestamp rollback occurs in the buffer region.

In some embodiments, if the pull position parameter is greater than 0 and no timestamp rollback occurs in the buffer region, the one or more processors of the computer apparatus are configured to implement the following operations:
determining the initial frame as the target media frame if the target media frame is present in a currently valid cache region, where a timestamp of the target media frame is greater than or equal to the target timestamp and is closest to the target timestamp; and
entering a waiting state until the target media frame is written into the currently valid cache region, and determining the initial frame as the target media frame, if the target media frame is absent in the currently valid cache region.

In some embodiments, the one or more processors of the computer apparatus are further configured to implement the following operation:
transmitting pull failure information, if the target media frame is absent in the currently valid cache region and a difference between the target timestamp and the maximum timestamp is greater than a time-out threshold.

In some embodiments, if the pull position parameter is greater than 0, the one or more processors of the computer apparatus are further configured to implement the following operations:
determining that the timestamp rollback occurs in the buffer region if timestamps of media frames in a media frame sequence in the buffer region increase non-monotonically; and
determining that no timestamp rollback occurs in the buffer region if timestamps of media frames in the media frame sequence in the buffer region increase monotonically, where the media frame sequence is a sequence formed by a plurality of media frames that have been buffered in the buffer region.

In some embodiments, the one or more processors of the computer apparatus are further configured to implement the following operation:
determining that the media frame sequence is in a state of increasing non-monotonically, if a video resource is included in the buffer region and timestamps of key frames in a key frame sequence increase non-monotonically, where the key frame sequence is a sequence formed by a plurality of key frames that have been buffered in the buffer region; and
determining that the media frame sequence is in a state of increasing non-monotonically, if no video resource is included in the buffer region and timestamps of audio frames in an audio frame sequence increase non-monotonically, where the audio frame sequence is a sequence formed by a plurality of audio frames that have been buffered in the buffer region.

In some embodiments, the one or more processors of the computer apparatus are further configured to implement the following operation:
determining media frames included in the last monotonically increasing stage as a resource in the currently valid cache region.

In some embodiments, the one or more processors of the computer apparatus are configured to implement the following operation:
determining that the initial frame is a media frame with a timestamp closest to the target timestamp in the currently valid cache region.

In some embodiments, the maximum timestamp is the maximum video timestamp, if the audio parameter is a default value or the audio parameter is false and a video resource is included in a currently valid cache region; and the maximum timestamp is the maximum audio timestamp if no video resource is included in the currently valid cache region.

In some embodiments, the one or more processors of the computer apparatus are configured to implement the following operations:
acquiring the pull position parameter by parsing the frame acquisition request if the frame acquisition request carries the pull position parameter; and
configuring the pull position parameter as a default value if the frame acquisition request carries no pull position parameter.

In some embodiments, the one or more processors of the computer apparatus are configured to implement the following operations:
acquiring address information of the multimedia resource by parsing the frame acquisition request; and
transmitting the media frames of the multimedia resource indicated by the address information from the initial frame.

In some embodiments, a computer program product is provided. The computer program product includes one or more instructions, where the one or more instructions, when executed by a processor of a computer apparatus, cause the computer apparatus to implement the method for transmitting resources of the foregoing embodiments.

## Claims

1. A method for transmitting resources, comprising:
acquiring a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource;
determining an initial frame of the multimedia resource based on the pull position parameter of the multimedia resource; and
transmitting the media frames of the multimedia resource from the initial frame, wherein a timestamp of the media frames is greater than or equal to a timestamp of the initial frame.

2. The method for transmitting resources according to claim 1, wherein determining the initial frame of the multimedia resource based on the pull position parameter of the multimedia resource comprises:
acquiring an audio parameter of the multimedia resource, wherein the audio parameter is configured to indicate whether the media frames are audio frames;
determining a target timestamp based on the audio parameter and the pull position parameter; and
determining the initial frame of the multimedia resource based on the target timestamp.

3. The method for transmitting resources according to claim 2, wherein determining the target timestamp based on the audio parameter and the pull position parameter comprises:
determining that the target timestamp is a value acquired by subtracting an absolute value of a default value of the pull position parameter from a maximum timestamp, if the pull position parameter is the default value and the audio parameter is a default value or the audio parameter is false;
determining that the target timestamp is a value acquired by subtracting the absolute value of the default value of the pull position parameter from a maximum audio timestamp, if the pull position parameter is the default value and the audio parameter is true;
determining that the target timestamp is the maximum timestamp, if the pull position parameter is 0 and the audio parameter is a default value or the audio parameter is false;
determining that the target timestamp is the maximum audio timestamp, if the pull position parameter is 0 and the audio parameter is true;
determining that the target timestamp is a value acquired by subtracting an absolute value of the pull position parameter from the maximum timestamp, if the pull position parameter is less than 0 and the audio parameter is a default value or the audio parameter is false;
determining that the target timestamp is a value acquired by subtracting the absolute value of the pull position parameter from the maximum audio timestamp, if the pull position parameter is less than 0 and the audio parameter is true;
determining that the target timestamp is the maximum timestamp, if the pull position parameter is greater than 0, the audio parameter is a default value or the audio parameter is false and timestamp rollback occurs in a buffer region;
determining that the target timestamp is the maximum audio timestamp, if the pull position parameter is greater than 0, the audio parameter is true and the timestamp rollback occurs in the buffer region; and
determining that the target timestamp is the pull position parameter, if the pull position parameter is greater than 0 and no timestamp rollback occurs in the buffer region.

4. The method for transmitting resources according to claim 2, wherein if the pull position parameter is greater than 0 and no timestamp rollback occurs in the buffer region, said determining the initial frame of the multimedia resource based on the target timestamp comprises:
determining the initial frame as the target media frame, if the target media frame is present in a currently valid cache region, wherein a timestamp of the target media frame is greater than or equal to the target timestamp and is closest to the target timestamp; and
entering a waiting state until the target media frame is written into the currently valid cache region and determining the initial frame as the target media frame, if the target media frame is absent in the currently valid cache region.

5. The method for transmitting resources according to claim 4, wherein the method further comprises:
sending pull failure information, if the target media frame is absent in the currently valid cache region and a difference between the target timestamp and the maximum timestamp is greater than a time-out threshold.

6. The method for transmitting resources according to claim 2, wherein if the pull position parameter is greater than 0, the method further comprises:
determining that a timestamp rollback occurs in a buffer region, if timestamps of media frames in a media frame sequence in the buffer region increase non-monotonically; and
determining that no timestamp rollback occurs in the buffer region, if timestamps of media frames in the media frame sequence in the buffer region increase monotonically, wherein the media frame sequence is a sequence formed by a plurality of media frames that have been buffered in the buffer region.

7. The method for transmitting resources according to claim 6, wherein the method further comprises:
determining that the media frame sequence is in a state of increasing non-monotonically, if a video resource is comprised in the buffer region and timestamps of key frames in a key frame sequence increase non-monotonically, wherein the key frame sequence is a sequence formed by a plurality of key frames that have been buffered in the buffer region; and
determining that the media frame sequence is in a state of increasing non-monotonically, if no video resource is comprised in the buffer region and timestamps of audio frames in an audio frame sequence increase non-monotonically, wherein the audio frame sequence is a sequence formed by a plurality of audio frames that have been buffered in the buffer region.

8. The method for transmitting resources according to claim 6, wherein the method further comprises:
determining media frames comprised in a last monotonically increasing stage as a resource in a currently valid cache region.

9. The method for transmitting resources according to claim 2, wherein determining the initial frame of the multimedia resource based on the target timestamp comprises:
determining that the initial frame is a media frame with a timestamp closest to the target timestamp in the currently valid cache region.

10. The method for transmitting resources according to claim 2, wherein,
a maximum timestamp is a maximum video timestamp, if the audio parameter is a default value or the audio parameter is false and a video resource is comprised in a currently valid cache region; and
the maximum timestamp is the maximum audio timestamp, if no video resource is comprised in the currently valid cache region.

11. The method for transmitting resources according to claim 1, wherein said acquiring the pull position parameter of the multimedia resource in response to the frame acquisition request of the multimedia resource comprises:
acquiring the pull position parameter by parsing the frame acquisition request, if the frame acquisition request carries the pull position parameter; and
configuring the pull position parameter as a default value, if the frame acquisition request carries no pull position parameter.

12. The method for transmitting resources according to claim 1, wherein said transmitting the media frames of the multimedia resource from the initial frame comprises:
acquiring address information of the multimedia resource by parsing the frame acquisition request, based on the frame acquisition request; and
transmitting the media frames of the multimedia resource indicated by the address information from the initial frame.

13. A computer apparatus, comprising:
one or more processors; and
one or more memories for storing an instruction executable by the one or more processors,
wherein the one or more processors are configured to execute the instruction to implement the following operations:
acquiring a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource;
determining an initial frame of the multimedia resource based on the pull position parameter of the multimedia resource; and
transmitting the media frames of the multimedia resource from the initial frame, wherein a timestamp of the media frames is greater than or equal to a timestamp of the initial frame.

14. The computer apparatus according to claim 13, wherein the one or more processors are configured to execute the instruction to implement the following operations:
acquiring an audio parameter of the multimedia resource, wherein the audio parameter is configured to indicate whether the media frames are audio frames;
determining a target timestamp based on the audio parameter and the pull position parameter; and
determining the initial frame of the multimedia resource based on the target timestamp.

15. The computer apparatus according to claim 14, wherein the one or more processors are configured to execute the instruction to implement the following operations:
determining that the target timestamp is a value acquired by subtracting an absolute value of a default value of the pull position parameter from a maximum timestamp, if the pull position parameter is the default value and the audio parameter is a default value or the audio parameter is false;
determining that the target timestamp is a value acquired by subtracting the absolute value of the default value of the pull position parameter from a maximum audio timestamp, if the pull position parameter is the default value and the audio parameter is true;
determining that the target timestamp is the maximum timestamp, if the pull position parameter is 0 and the audio parameter is a default value or the audio parameter is false;
determining that the target timestamp is the maximum audio timestamp, if the pull position parameter is 0 and the audio parameter is true;
determining that the target timestamp is a value acquired by subtracting an absolute value of the pull position parameter from the maximum timestamp, if the pull position parameter is less than 0 and the audio parameter is a default value or the audio parameter is false;
determining that the target timestamp is a value acquired by subtracting the absolute value of the pull position parameter from the maximum audio timestamp, if the pull position parameter is less than 0 and the audio parameter is true;
determining that the target timestamp is the maximum timestamp, if the pull position parameter is greater than 0, the audio parameter is a default value or the audio parameter is false and timestamp rollback occurs in a buffer region;
determining that the target timestamp is the maximum audio timestamp, if the pull position parameter is greater than 0, the audio parameter is true and the timestamp rollback occurs in the buffer region; and
determining that the target timestamp is the pull position parameter, if the pull position parameter is greater than 0 and no timestamp rollback occurs in the buffer region.

16. The computer apparatus according to claim 14, wherein if the pull position parameter is greater than 0 and no timestamp rollback occurs in the buffer region, the one or more processors are configured to execute the instruction to implement the following operations:
determining the initial frame as the target media frame if the target media frame is present in a currently valid cache region, wherein a timestamp of the target media frame is greater than or equal to the target timestamp and is closest to the target timestamp; and
entering a waiting state until the target media frame is written into the currently valid cache region and determining the initial frame as the target media frame, if the target media frame is absent in the currently valid cache region.

17. The computer apparatus according to claim 16, wherein the one or more processors are further configured to execute the instruction to implement the following operation:
sending pull failure information, if the target media frame is absent in the currently valid cache region and a difference between the target timestamp and the maximum timestamp is greater than a time-out threshold.

18. The computer apparatus according to claim 14, wherein if the pull position parameter is greater than 0, the one or more processors are configured to execute the instruction to implement the following operations:
determining that a timestamp rollback occurs in a buffer region, if timestamps of media frames in a media frame sequence in the buffer region increase non-monotonically; and
determining that no timestamp rollback occurs in the buffer region, if timestamps of media frames in the media frame sequence in the buffer region increase monotonically, wherein the media frame sequence is a sequence formed by a plurality of media frames that have been buffered in the buffer region.

19. The computer apparatus according to claim 18, wherein the one or more processors are further configured to execute the instruction to implement the following operations:
determining that the media frame sequence is in a state of increasing non-monotonically, if a video resource is comprised in the buffer region and timestamps of key frames in a key frame sequence increase non-monotonically, wherein the key frame sequence is a sequence formed by a plurality of key frames that have been buffered in the buffer region; and
determining that the media frame sequence is in a state of increasing non-monotonically, if no video resource is comprised in the buffer region and timestamps of audio frames in an audio frame sequence increase non-monotonically, wherein the audio frame sequence is a sequence formed by a plurality of audio frames that have been buffered in the buffer region.

20. The computer apparatus according to claim 18, wherein the one or more processors are further configured to execute the instruction to implement the following operation:
determining media frames comprised in a last monotonically increasing stage as a resource in the currently valid cache region.

21. The computer apparatus according to claim 14, wherein the one or more processors are configured to execute the instruction to implement the following operation:
determining that the initial frame is a media frame with a timestamp closest to the target timestamp in the currently valid cache region.

22. The computer apparatus according to claim 14, wherein,
a maximum timestamp is a maximum video timestamp, if the audio parameter is a default value or the audio parameter is false and a video resource is comprised in a currently valid cache region; and
the maximum timestamp is the maximum audio timestamp, if no video resource is comprised in the currently valid cache region.

23. The computer apparatus according to claim 13, wherein the one or more processors are configured to execute the instruction to implement the following operations:
acquiring the pull position parameter by parsing the frame acquisition request, if the frame acquisition request carries the pull position parameter; and
configuring the pull position parameter as a default value, if the frame acquisition request carries no pull position parameter.

24. The computer apparatus according to claim 13, wherein the one or more processors are configured to execute the instruction to implement the following operations:
acquiring address information of the multimedia resource by parsing the frame acquisition request, based on the frame acquisition request; and
transmitting the media frames of the multimedia resource indicated by the address information from the initial frame.

25. A storage medium, wherein at least one instruction in the storage medium, when executed by one or more processors of a computer apparatus, causes the computer apparatus to implement the following operations:
acquiring a pull position parameter of a multimedia resource in response to a frame acquisition request of the multimedia resource, wherein the frame acquisition request is configured to request transmission of media frames of the multimedia resource, and the pull position parameter is configured to indicate an initial pull position of the media frames of the multimedia resource;
determining an initial frame of the multimedia resource based on the pull position parameter of the multimedia resource; and
transmitting the media frames of the multimedia resource from the initial frame, wherein a timestamp of the media frames is greater than or equal to a timestamp of the initial frame.
